# EUROPEAN PATENT APPLICATION

(11) **EP 4 737 889 A1**
(43) Date of publication of application: **06.05.2026**
(21) Application number: 24831959.2
(22) Date of filing: 25.06.2024
(51) Int. Cl.: G01N 21/956, G06T 7/00

(54) **DEFECT INSPECTION DEVICE, DEFECT INSPECTION METHOD, AND DEFECT INSPECTION PROGRAM**

(30) Priority: 30.06.2023 JP 2023108434
(71) Applicant: Resonac Corporation, Tokyo 105-7325 (JP)
(72) Inventor: OKUNO, Katsuki, Tokyo 105-7325 (JP); NOMA, Hirokazu, Tokyo 105-7325 (JP); HIRAHARA, Mana, Tokyo 105-7325 (JP); TAKEMOTO, Shimpei, Tokyo 105-7325 (JP)
(74) Representative: Strehl & Partner mbB
(86) International application number: PCT/JP2024/023069
(87) International publication number: WO 2025/005099

(57) **Abstract**

A defect inspection device includes an image recognition processing unit configured to determine attributes of respective regions within an inspection target by performing image recognition processing on captured image data obtained by photographing the inspection target, an extracting unit configured to extract, from the captured image data, partial image data including a region having a specific attribute among the respective regions within the inspection target, a predicting unit configured to predict, by inputting the partial image data into a trained defect detection model, a probability that the partial image data includes a defect, and a display control unit configured to superimpose and display, at a position from which the partial image data has been extracted in the captured image data, an indicator having a display mode corresponding to the predicted probability.

## Description

### TECHNICAL FIELD

The disclosures herein relate to defect inspection devices, defect inspection methods, and defect inspection programs.

### BACKGROUND ART

There has been known a defect inspection device which performs object detection processing on captured image data obtained by capturing an image of an inspection target to detect defects included in the inspection target. According to the defect inspection device, for example, a more minute defect can be detected by increasing resolution of the captured image data.

### CITATION LIST

### PATENT LITERATURE

Patent Literature 1: Japanese Patent No. 7270314

### SUMMARY OF THE INVENTION

### PROBLEMS TO BE SOLVED BY THE INVENTION

Conversely, when the amount of data per sheet of captured image data is increased by increasing the resolution, a processing load of the defect inspection device increases. Therefore, from the perspective of reducing the processing load, it is possible to divide and process the captured image data. Further, in the case where an inspection target is a structure formed by a plurality of types of members, it may be considered that a minute defect can be detected with high accuracy if object detection processing is performed separately for each type of member, for example, rather than collectively for the entire captured image data.

The present disclosure aims to reduce a processing load when detecting a defect and to improve detection accuracy.

### MEANS FOR SOLVING PROBLEMS

A defect inspection device according to aspect 1 of the present disclosure includes:
an image recognition processing unit configured to determine attributes of respective regions within an inspection target by performing image recognition processing on captured image data obtained by photographing the inspection target;
an extracting unit configured to extract, from the captured image data, partial image data including a region having a specific attribute among the respective regions within the inspection target;
a predicting unit configured to predict, by inputting the partial image data into a trained defect detection model, a probability that the partial image data includes a defect; and
a display control unit configured to superimpose and display, at a position from which the partial image data has been extracted in the captured image data, an indicator having a display mode corresponding to the predicted probability.

Aspect 2 of the present disclosure is the defect inspection device according to aspect 1, wherein the region having the specific attribute is a region having an attribute in which occurrence of a defect is predicted.

Aspect 3 of the present disclosure is the defect inspection device according to aspect 1 or 2, wherein:
the image recognition processing unit is configured to determine a region having a first attribute in which occurrence of a defect is predicted in the inspection target and regions having a second attribute in which occurrence of a defect is not predicted in the inspection target; and
the extracting unit is configured to calculate a position of extraction from which the partial image data including the region having the first attribute is extracted, based on an arrangement of the regions having the second attribute.

Aspect 4 of the present disclosure is the defect inspection device according to aspect 3, wherein:
the regions having the second attribute are arranged in a lattice in the inspection target; and
the extracting unit is configured to:
   generate the lattice based on center points of the regions having the second attribute;
   calculate a position of a vertical-direction midpoint, a position of a horizontal-direction midpoint, or a position of a diagonal direction midpoint between lattice points, as the position of extraction; and
extract, as the partial image data, rectangular regions centered on the calculated position of extraction within the captured image data.

Aspect 5 of the present disclosure is the defect inspection device according to aspect 4, wherein the extracting unit is configured to extract square regions of uniform size centered on respective positions of extraction as the partial image data.

Aspect 6 of the present disclosure is the defect inspection device according to aspect 4 or 5, wherein:
the inspection target is a semiconductor package substrate;
the region having the first attribute is a solder resist region; and
the regions having the second attribute are solder joint regions.

Aspect 7 of the present disclosure is the defect inspection device according to any one of aspects 3 to 6, wherein the image recognition processing unit is configured to determine, for each pixel, the first attribute and the second attribute using a semantic segmentation model.

Aspect 8 of the present disclosure is the defect inspection device according to any one of aspects 1 to 7, wherein the display control unit is configured to superimpose and display, at a position where the partial image data having the predicted probability equal to or greater than a predetermined threshold has been extracted, a rectangular frame having a size corresponding to the extracted partial image data and indicating a defect.

Aspect 9 of the present disclosure is the defect inspection device according to any one of aspects 1 to 8, wherein the display control unit is configured to superimpose and display, at a position where the partial image data has been extracted, the predicted probability and a rectangular frame having a size corresponding to the extracted partial image data.

Aspect 10 of the present disclosure is the defect inspection device according to any one of aspects 1 to 9, further including:
an aggregation unit configured to determine presence or absence of a defect based on the predicted probability with respect to each said partial image data and to aggregate determination results; and
a calculation unit configured to perform statistical processing based on the determination results to calculate a statistical value,
wherein the display control unit is configured to superimpose and display, on the captured image data, a result of aggregation and the calculated statistical value.

Aspect 11 of the present disclosure is the defect inspection device according to any one of aspects 1 to 10, wherein the predicting unit is configured to predict the probability that the partial image data includes a defect, by inputting the partial image data into the trained defect detection model trained based on training data including partial image data and information indicating types of defects.

A defect inspection method according to aspect 12 of the present disclosure includes:
determining attributes of respective regions within an inspection target by performing image recognition processing on captured image data obtained by photographing the inspection target;
extracting, from the captured image data, partial image data including a region having a specific attribute among the respective regions within the inspection target;
predicting, by inputting the partial image data into a trained defect detection model, a probability that the partial image data includes a defect; and
superimposing and displaying, at a position from which the partial image data has been extracted in the captured image data, an indicator having a display mode corresponding to the predicted probability.

A defect inspection program according to aspect 13 of the present disclosure includes:
determining attributes of respective regions within an inspection target by performing image recognition processing on captured image data obtained by photographing the inspection target;
extracting, from the captured image data, partial image data including a region having a specific attribute among the respective regions within the inspection target;
predicting, by inputting the partial image data into a trained defect detection model, a probability that the partial image data includes a defect; and
superimposing and displaying, at a position from which the partial image data has been extracted in the captured image data, an indicator having a display mode corresponding to the predicted probability.

### EFFECT OF THE INVENTION

According to the present disclosure, it is possible to reduce the processing load when detecting a defect and to improve the detection accuracy.

### BRIEF DESCRIPTION OF THE DRAWINGS

[FIG. 1] FIG. 1 is a drawing illustrating an example of a system configuration of a defect inspection system.
[FIG. 2] FIG. 2 is a drawing illustrating an example of an inspection target.
[FIG. 3] FIG. 3 is a drawing illustrating an example of a hardware configuration of a training device and a defect inspection device.
[FIG. 4] FIG. 4 is a drawing illustrating an example of a functional configuration of the training device.
[FIG. 5] FIG. 5 is a drawing illustrating a specific example of processing by an image recognition processing unit.
[FIG. 6] FIG. 6 is a drawing illustrating a specific example of processing by a point coordinates calculation unit.
[FIG. 7] FIG. 7 is a drawing illustrating a specific example of processing by a partial image extracting unit.
[FIG. 8] FIG. 8 is a drawing illustrating a specific example of processing by a training data generating unit.
[FIG. 9] FIG. 9 is a drawing illustrating a specific example of processing by a training unit.
[FIG. 10] FIG. 10 is an example of a flowchart illustrating a flow of training processing of the training device.
[FIG. 11] FIG. 11 is a drawing illustrating an example of a functional configuration of the defect inspection device.
[FIG. 12] FIG. 12 is a drawing illustrating a specific example of processing by a display control unit.
[FIG. 13] FIG. 13 is an example of a flowchart illustrating a flow of defect inspection processing of the defect inspection device.

### DESCRIPTION OF THE PREFERRED EMBODIMENTS

In the following, embodiments of the present invention will be described with reference to the accompanying drawings. In the drawings, the same or corresponding constituent elements are denoted with the same reference numerals, and redundant description thereabout may be omitted.

### [FIRST EMBODIMENT]

### <SYSTEM CONFIGURATION OF DEFECT INSPECTION SYSTEM>

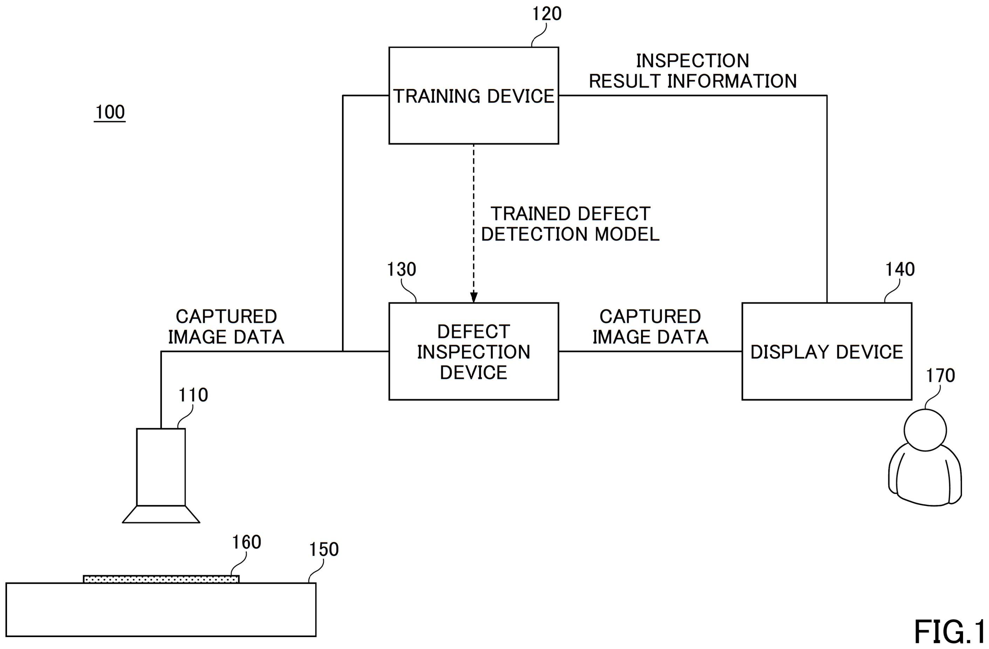

First, a system configuration of a defect inspection system including a defect inspection device according to a first embodiment will be described. FIG. 1 is a drawing illustrating an example of a system configuration of the defect inspection system. As shown in FIG. 1, the defect inspection system 100 includes an imaging device 110, a training device 120, a defect inspection device 130, and a display device 140.

The imaging device 110 captures an image of an inspection target 160 placed on an inspection table 150 and transmits the captured image data to the training device 120 or the defect inspection device 130.

In a training phase, the training device 120 performs image recognition processing on the captured image data transmitted from the imaging device 110 and determines the attribute of each region in the inspection target 160 for each pixel. Moreover, the training device 120 extracts partial image data that includes a region with a specific attribute in which occurrence of a defect is predicted among the regions whose attributes have been determined from the captured image data. Further, the training device 120 acquires inspection result information when an inspector 170 visually inspects the captured image data displayed on the display device 140 from the display device 140 and stores it as training data in association with the partial image data. Further, the training device 120 performs training processing on the defect detection model by using the training data and generates a trained defect detection model.

In the inspection phase, the defect inspection device 130 performs image recognition processing on the captured image data transmitted from the imaging device 110 and determines the attribute of each region in the inspection target 160 for each pixel. In the first embodiment, among a plurality of types of members forming the inspection target 160, a region of the same type of member is determined as a region having the same attribute.

In addition, the defect inspection device 130 extracts partial image data including a region having a specific attribute in which occurrence of a defect is predicted from the captured image data among the regions having the attribute determined. The defect inspection device 130 inputs the extracted partial image data into the trained defect detection model to predict the probability that the partial image data has a defect. Further, the defect inspection device 130 superimposes an indicator having a display mode corresponding to the predicted probability on the captured image data at the position of the extracted partial image data and transmits the captured image data to the display device 140.

In the training phase, the display device 140 acquires image data captured by the imaging device 110 via the defect inspection device 130 and displays it to the inspector 170. Thus, the inspector 170 can perform a visual inspection and transmit inspection result information to the training device 120.

Further, in the inspection phase, the display device 140 receives from the defect inspection device 130 captured image data in which an indicator having a display mode corresponding to the predicted probability is superimposed on each position of the extracted partial image data and displays it to the inspector 170. Thus, for example, the inspector 170 can perform a visual inspection by focusing on the partial image data whose predicted probability is not less than a predetermined threshold value.

Thus, the defect inspection device 130 according to the first embodiment extracts the partial image data from the captured image data and predicts the probability of having a defect with respect to the extracted partial image data. Thus, according to the first embodiment, the processing load of the defect inspection device 130 can be reduced as compared with the case where the processing is performed collectively for the entire captured image data.

Further, the defect inspection device 130 according to the first embodiment determines the attribute of each region by performing image recognition processing and extracts a region having a specific attribute in which occurrence of a defect is predicted as partial image data. Thus, according to the first embodiment, even if the inspection target is a structure formed by a plurality of members, a region of a member in which occurrence of a defect is predicted can be extracted as partial image data.

That is, the region of the member indicative of no likely occurrence of a defect is not a prediction target, and thus the processing load of the defect inspection device 130 can be further reduced as compared with the case where all regions are extracted as partial image data. Further, since the specific attribute in which occurrence of a defect is predicted occupies a large proportion of the extracted partial image data, the detection accuracy of a minute defect can be improved as compared with the case where a minute defect is detected from captured image data including regions of a plurality of types of members.

### <ONE EXAMPLE OF INSPECTION TARGET>

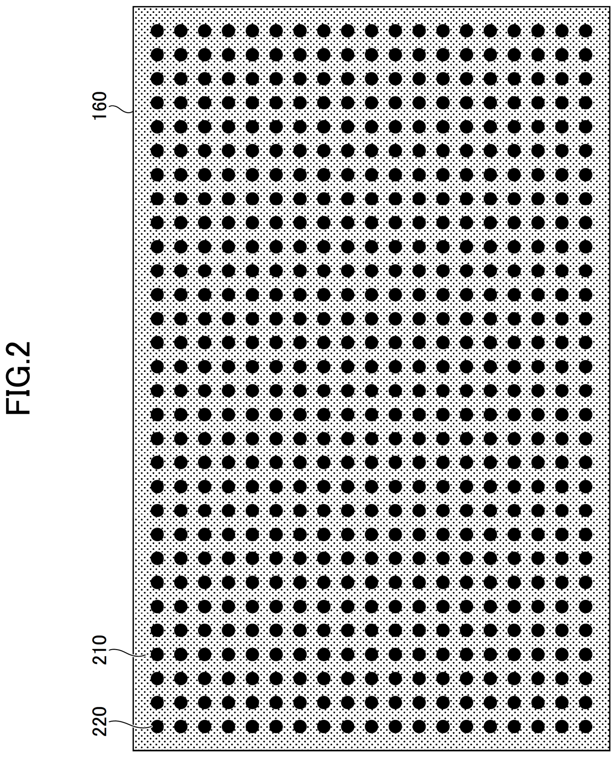

Next, a specific example of an inspection target 160 to be inspected by the defect inspection device 130 according to the first embodiment will be described. FIG. 2 is a drawing illustrating an example of the inspection target. As shown in FIG. 2, the inspection target 160 is a structure formed by a base 210 and a plurality of members 220. More specifically, the inspection target 160 is a semiconductor package substrate, and the example of FIG. 2 shows the semiconductor package substrate as seen from above. Therefore, the base 210 is a solder resist, and the plurality of members 220 are solder joints.

As shown in FIG. 2, when the inspection target 160 is a semiconductor package substrate, the solder joints, which are the plurality of members 220, have substantially the same size and shape, and are arranged on the solder resist, which is the base 210, at equal intervals in a lattice.

In the first embodiment, likely occurrence of a minute defect is indicative in the region of the base 210 of the inspection target 160. Further, when the minute defect occurs, the imaging device 110 has a resolution sufficient to detect the occurring minute defect. Therefore, the amount of captured image data of the entire inspection target 160 is large, and when the captured image data is collectively processed, the processing load of the defect inspection device 130 increases.

Therefore, as described above, the defect inspection device 130 according to the first embodiment extracts partial image data from the captured image data. At this time, the defect inspection device 130 according to the first embodiment extracts each region of the base 210 located between adjacent members 220 as partial image data.

### <HARDWARE CONFIGURATION OF TRAINING DEVICE AND DEFECT INSPECTION DEVICE>

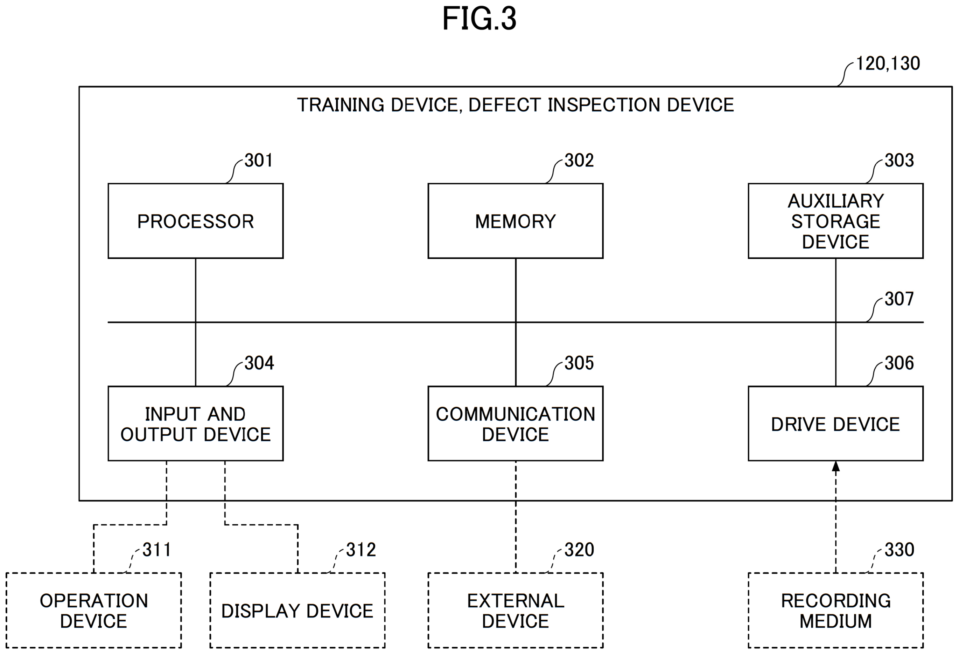

Next, the hardware configurations of the training device 120 and the defect inspection device 130 will be described. Since the hardware configurations of the training device 120 and the defect inspection device 130 are substantially the same, they will be described together with reference to FIG. 3.

FIG. 3 is a drawing illustrating an example of a hardware configuration of the training device and the defect inspection device. As shown in FIG. 3, the training device 120 and the defect inspection device 130 include a processor 301, a memory 302, an auxiliary storage device 303, an input and output device 304, a communication device 305, and a drive device 306. The respective hardware components of the training device 120 and the defect inspection device 130 are connected to each other via a bus 307.

The processor 301 includes various computing devices such as a CPU (Central Processing Unit) and a GPU (Graphics Processing Unit). The processor 301 reads various programs into the memory 302 and executes them. Here, the various programs include, for example, programs such as training programs and defect inspection programs described later.

The memory 302 includes a main storage device such as a ROM (Read Only Memory) and a RAM (Random Access Memory). The processor 301 and the memory 302 form what is called a computer. The computer achieves various functions by executing various programs read into the memory 302 by the processor 301.

The auxiliary storage device 303 stores various programs and various data used when the various programs are executed by the processor 301. For example, the training data storage unit 411, the trained model storage unit 412, and the trained model storage unit 1111 described later are achieved in the auxiliary storage device 303.

The input and output device 304 is a connection device for connecting to an operation device 311 and a display device 312, which are examples of user interface devices. The communication device 305 is a communication device for communicating with an external device 320 via a network. The external device 320 includes an imaging device 110, a display device 140, and the like.

The drive device 306 is a device for setting a recording medium 330. Here, the recording medium 330 includes a medium for optically, electrically, or magnetically recording information such as a CD-ROM, a flexible disk, or a magneto-optical disk. The recording medium 330 may include a medium such as a semiconductor memory for electrically recording information such as a ROM or a flash memory.

The various programs to be installed in the auxiliary storage device 303 are installed by, for example, setting a distributed recording medium 330 in the drive device 306 and reading out the various programs recorded in the recording medium 330. Alternatively, the various programs to be installed in the auxiliary storage device 303 may be downloaded from a network via the communication device 305.

### <FUNCTIONAL CONFIGURATION OF TRAINING DEVICE>

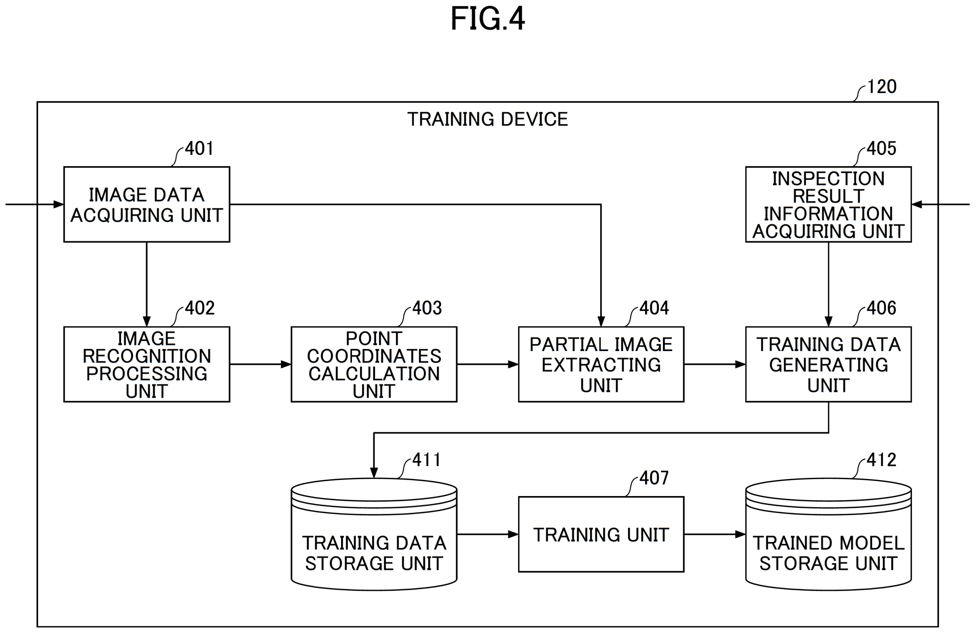

Next, the functional configuration of the training device 120 will be described. FIG. 4 is a drawing illustrating an example of a functional configuration of the training device. As described above, a training program is installed in the training device 120. By executing the training program, the training device 120 functions as an image data acquiring unit 401, an image recognition processing unit 402, a point coordinates calculation unit 403, a partial image extracting unit 404, an inspection result information acquiring unit 405, a training data generating unit 406, and a training unit 407.

The image data acquiring unit 401 acquires captured image data from the imaging device 110. The image data acquiring unit 401 notifies the image recognition processing unit 402 and the partial image extracting unit 404 of the acquired captured image data.

The image recognition processing unit 402 performs image recognition processing on the captured image data to determine, for each pixel, the attribute of each region included in the captured image data. In the first embodiment, the image recognition processing unit 402 inputs the captured image data into, for example, a semantic segmentation model to recognize the region of the base 210 and the region of the member 220 for each pixel. The semantic segmentation model used by the image recognition processing unit 402 is, for example, "DeepLabV3".

The point coordinates calculation unit 403 calculates a lattice vector in captured image data whose attributes are determined for each pixel. The lattice vector is a vector for generating a lattice that specifies the position coordinates of members 220 arranged in a lattice. The point coordinates calculation unit 403 determines the starting position and direction of the lattice vector so that the total distance between the lattice points and the center points of the members 220 is minimized. By determining the lattice vector in this way, even if one of the members 220 cannot be recognized in the image recognition processing, the lattice can be generated if the other members 220 can be recognized. Thus, the point coordinates calculation unit 403 can appropriately calculate the position coordinates of all the members 220.

The point coordinates calculation unit 403 generates a lattice based on the determined lattice vector and calculates position coordinates of a midpoint between adjacent lattice points in the generated lattice. The point coordinates calculation unit 403 also notifies the partial image extracting unit 404 of the calculated position coordinates of the midpoint.

The partial image extracting unit 404 specifies a rectangular area centered on the position coordinates of the midpoint notified from the point coordinates calculation unit 403 in the captured image data notified from the image data acquiring unit 401 and extracts it as partial image data. It is assumed that the shape and size of the rectangular area extracted as partial image data by the partial image extracting unit 404 are predetermined.

The partial image data extracted by the partial image extracting unit 404 are sequentially notified to the training data generating unit 406.

The inspection result information acquiring unit 405 acquires inspection result information from the display device 140 and notifies it to the training data generating unit 406.

The training data generating unit 406 generates training data by associating the partial image data notified from the partial image extracting unit 404 with the inspection result information notified from the inspection result information acquiring unit 405 and stores it in the training data storage unit 411. The inspection result information notified from the inspection result information acquiring unit 405 includes the type of the defect and the position coordinates of the defect. The training data generating unit 406 generates training data by associating the partial image data corresponding to the position coordinates of the defect with the type of the defect.

The training unit 407 performs training processing on the defect detection model by using the training data stored in the training data storage unit 411 and generates a trained defect detection model. The training unit 407 stores the generated trained defect detection model in the trained model storage unit 412.

### <SPECIFIC EXAMPLE OF PROCESSING BY EACH PART OF TRAINING DEVICE>

Next, a specific example of processing by each part of the training device 120 will be described. Here, as the processing of each part of the training device 120, a specific example of processing by the image recognition processing unit 402, the point coordinates calculation unit 403, the partial image extracting unit 404, the training data generating unit 406, and the training unit 407 will be described.

### (1) Specific example of processing by the image recognition processing unit 402

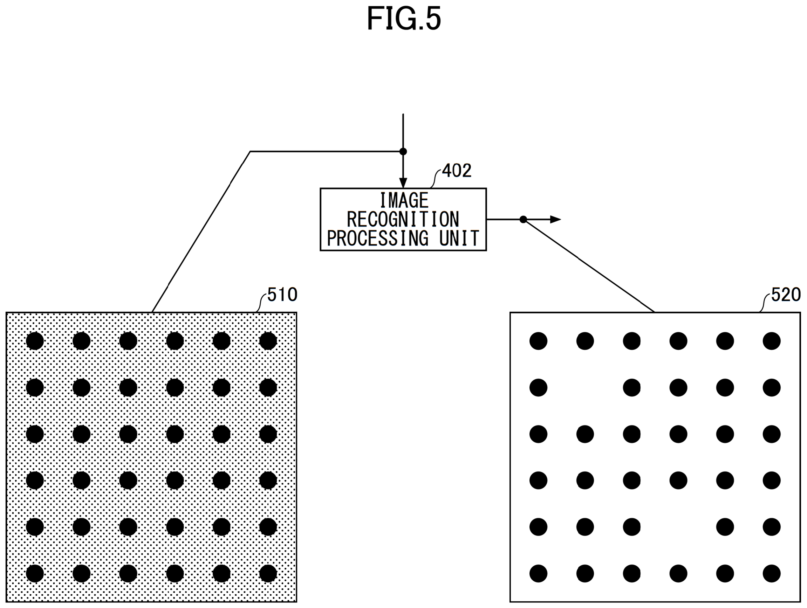

First, a specific example of processing by the image recognition processing unit 402 will be described. FIG. 5 is a drawing illustrating a specific example of processing by the image recognition processing unit. In FIG. 5, reference numeral 510 denotes captured image data. However, for convenience of illustration, in the example shown in FIG. 5, only a part of the captured image data of the inspection target 160 is extracted and shown.

As described above, the image recognition processing unit 402 performs the image recognition processing on the captured image data indicated by reference numeral 510 and determines the region of the base 210 and the region of the member 220 for each pixel.

In FIG. 5, reference numeral 520 denotes the result of the image recognition processing obtained when the image recognition processing unit 402 determines the region of the base 210 and the region of the member 220 for each pixel. In the example of reference numeral 520, a pixel determined to be the region of the base 210 by the image recognition processing unit 402 is shown in white. In the example of reference numeral 520, pixels determined to be the regions of the members 220 by the image recognition processing unit 402 are shown in black.

Note that the example of the result of the image recognition processing shown by reference numeral 520 shows a state in which some of a plurality of members 220 are not recognized.

### (2) Specific example of processing by the point coordinates calculation unit 403

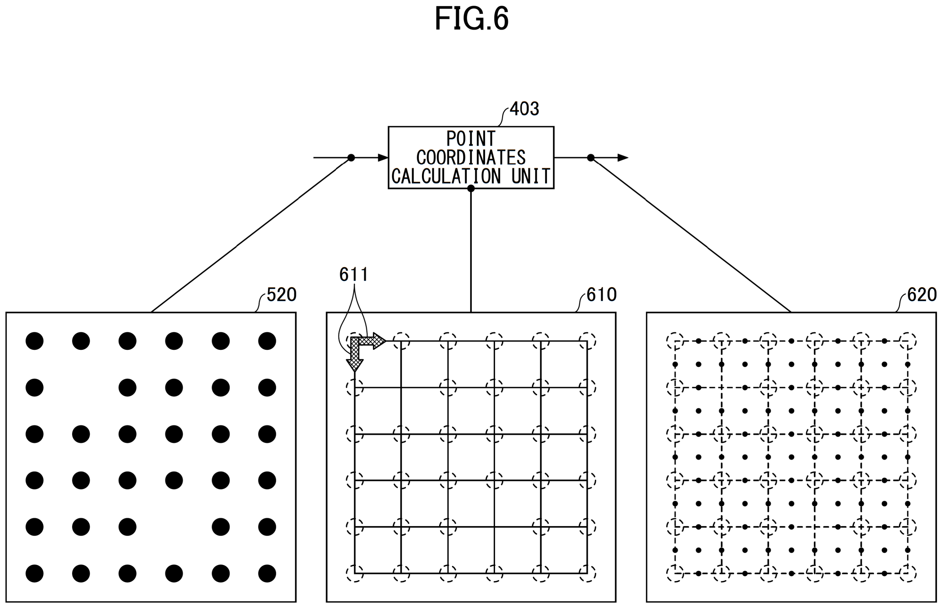

Next, a specific example of the processing of the point coordinates calculation unit 403 will be described. FIG. 6 is a drawing illustrating a specific example of processing by the point coordinates calculation unit. As shown in FIG. 6, when the result of the image recognition processing indicated by reference numeral 520 is input, the point coordinates calculation unit 403 determines a lattice vector 611 as indicated by reference numeral 610.

As described above, the point coordinates calculation unit 403 determines the starting position and direction of the lattice vector 611 so that the total distance between the lattice points and the center points of the members 220 is minimized. A solid line indicated by reference numeral 610 indicates a lattice generated based on the determined lattice vector 611 and the like. By generating the lattice in this way, even if some regions of the plurality of members 220 are not recognized, the point coordinates calculation unit 403 can appropriately calculate the position coordinates of all the members 220.

As described above, the point coordinates calculation unit 403 calculates position coordinates of a midpoint between adjacent lattice points in the generated lattice. In FIG. 6, black circles in reference numeral 620 indicate:
- position coordinates of a vertical-direction midpoint between adjacent lattice points;
- position coordinates of a horizontal-direction midpoint between adjacent lattice points; and
- position coordinates of a diagonal-direction midpoint between adjacent lattice points,
calculated by the point coordinates calculation unit 403.

### (3) Specific example of processing by the partial image extracting unit 404

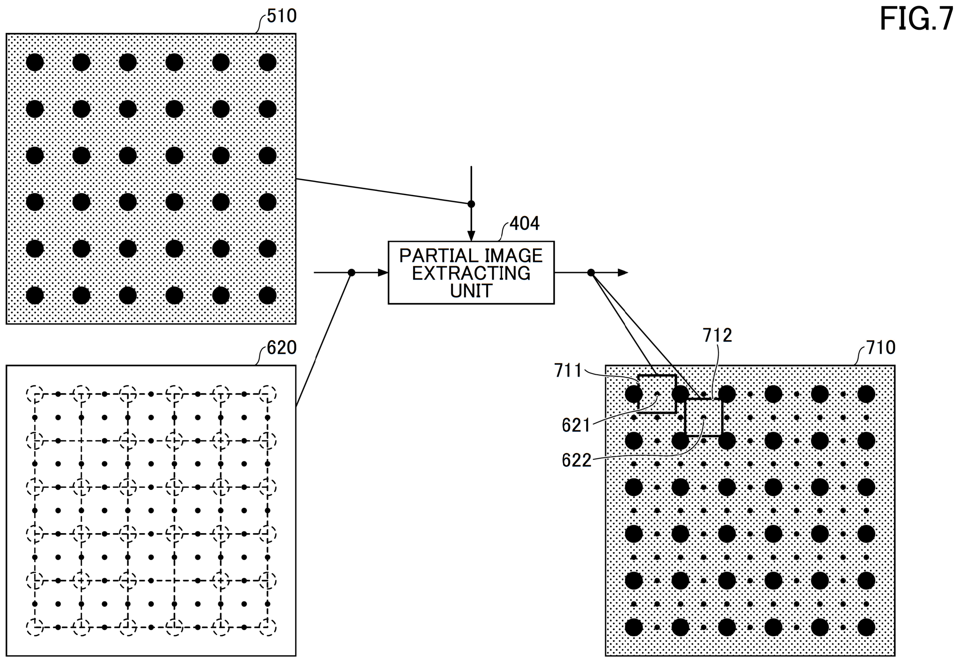

Next, a specific example of the processing of the partial image extracting unit 404 will be described. FIG. 7 is a drawing illustrating a specific example of processing by the partial image extracting unit. As shown in FIG. 7, when the captured image data indicated by reference numeral 510 and the position coordinates of the midpoints indicated by reference numeral 620 are input, the partial image extracting unit 404 extracts the partial image data as indicated by reference numeral 710.

As described above, the partial image extracting unit 404 extracts a rectangular region centered on the position coordinates of the midpoint from the captured image data as partial image data. Reference numeral 710 indicates that the partial image data 711 extracts a rectangular region centered on the position coordinates of the midpoint 621 from the captured image data. Similarly, reference numeral 710 indicates that the partial image data 712 extracts a rectangular region centered on the position coordinates of the midpoint 622 from the captured image data.

In the example shown in FIG. 7, the rectangular region has a square shape, and the extracted rectangular regions are of the same size. This is to facilitate the training processing when the defect detection model is input into the training processing. Further, by rotating the extracted partial image data by 90 degrees or 180 degrees, the partial image data can be stored in the training data as partial image data different from the partial image data before the rotation, so that the amount of the training data can be increased.

### (4) Specific example of processing by the training data generating unit 406

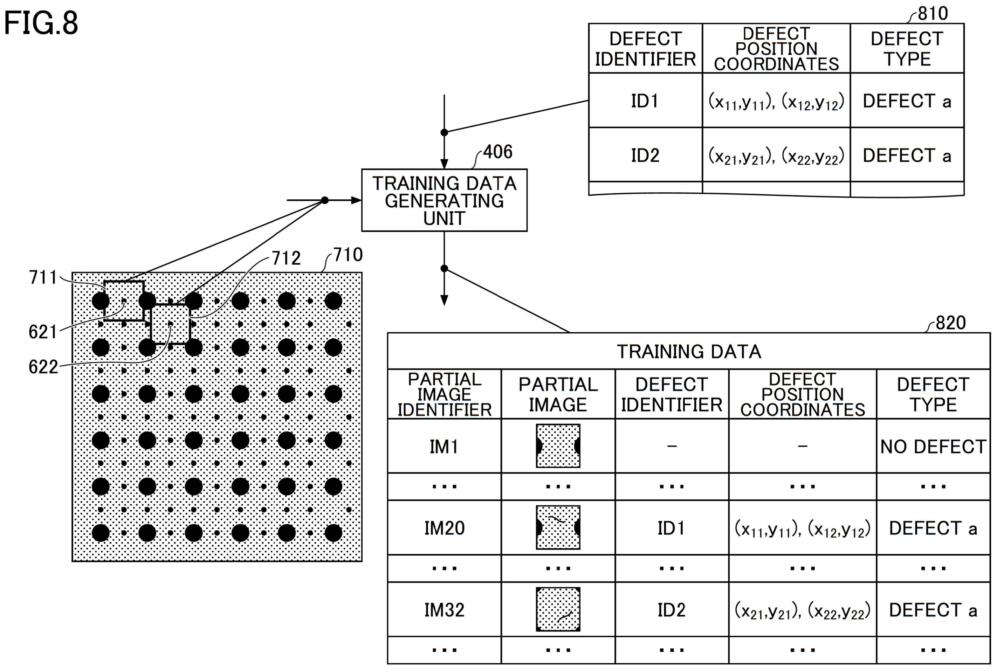

Next, a specific example of the processing of the training data generating unit 406 will be described. FIG. 8 is a drawing illustrating a specific example of processing by the training data generating unit.

In FIG. 8, reference numeral 810 indicates an example of inspection result information transmitted from the display device 140. As shown by reference numeral 810, the inspection result information includes "defect identifier", "defect position coordinates", and "defect type" as items of information.

The "defect identifier" stores an identifier for identifying a defect detected by visual inspection by the inspector 170. The "defect position coordinates" stores information calculated when the inspector 170 inputs a circumscribed rectangle of the defect, and information for specifying the position and size of the circumscribed rectangle. Specifically, the upper left position coordinate and the lower right position coordinate of the circumscribed rectangle are stored. The "defect type" stores the type of defect determined by visual inspection by the inspector 170.

As shown in FIG. 8, when inspection result information indicated by reference numeral 810 and partial image data 711, 712 and the like indicated by reference numeral 710 are input, the training data generating unit 406 generates training data 820. The training data 820 includes "partial image identifier", "partial image", "defect identifier", "defect position coordinates", and "defect type" as information items.

The "partial image identifier" stores an identifier for identifying the partial image data. The "partial image" stores partial image data. The "defect identifier", "defect position coordinates", and "defect type" store corresponding inspection result information, respectively.

In the example shown in FIG. 8, the partial image data of the "partial image identifier" = "IM1" has no defect, so there is no corresponding inspection result information. Therefore, "defect identifier" and "defect position coordinates" are blank, and "no defect" is stored in "defect type".

Conversely, the partial image data of "partial image identifier" = "IM20" has a defect and corresponding inspection result information. Therefore, "ID1", "(x₁₁, y₁₁), (x₁₂, y₁₂)", and "defect a" are stored in "defect identifier", "defect position coordinates", and "defect type", respectively. Similarly, the partial image data of "partial image identifier" = "IM32" has a defect and corresponding inspection result information. Therefore, "ID2", " (x₂₁, y₂₁), (x₂₂, y₂₂)", and "defect a" are stored in "defect identifier", "defect position coordinates", and "defect type", respectively.

The training data generating unit 406 associates the partial image data with the inspection result information based on the relationship between the position coordinates of the extracted partial image data and the position coordinates stored in "defect position coordinates" of the inspection result information. The training data generating unit 406 stores the generated training data 820 in the training data storage unit 411.

### (5) Specific example of processing by the training unit 407

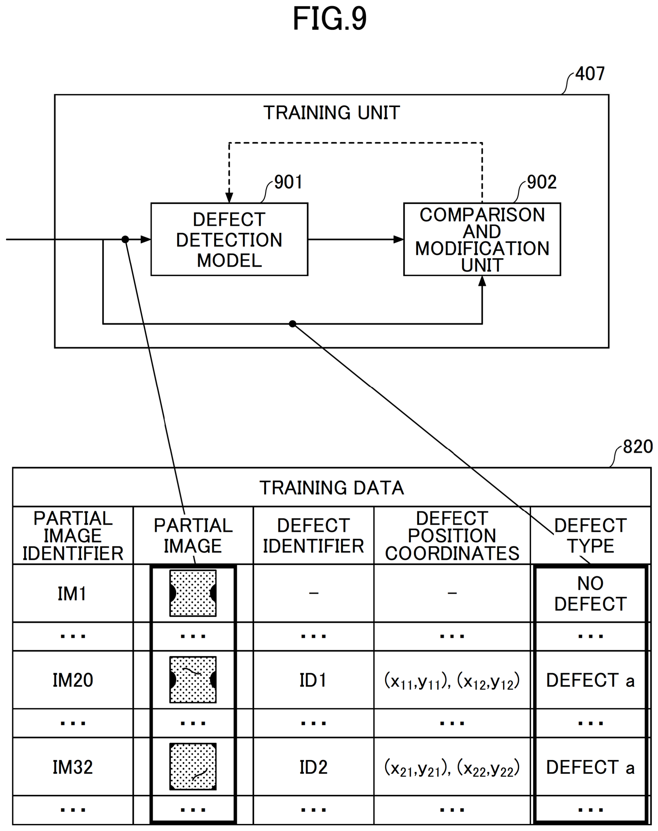

Next, a specific example of the processing of the training unit 407 will be described. FIG. 9 is a drawing illustrating a specific example of processing by the training unit. As shown in FIG. 9, the training unit 407 includes a defect detection model 901 and a comparison and modification unit 902. The training unit 407 performs training processing on the defect detection model 901 by using the training data 820 stored in the training data storage unit 411.

Specifically, the training unit 407 inputs each partial image data stored in the "partial image" of the training data 820 into the defect detection model 901. As a result, the defect detection model 901 outputs the probability that each partial image data has a defect as output data. The training unit 407 inputs the type of the defect stored in the "defect type" of the training data 820 into the comparison and modification unit 902. As a result, the comparison and modification unit 902 compares the output data output from the defect detection model 901 with the type of the defect stored in the "defect type".

For example, in the case of partial image data where "partial image identifier" = "IM1", the comparison and modification unit 902 compares the output data output from the defect detection model 901 with "0%" indicating "no defect" which is the type of defect stored in "defect type", and calculates error. Similarly, in the case of partial image data where "partial image identifier" = "IM20", the comparison and modification unit 902 compares the output data output from the defect detection model 901 with "100%" indicating "defect a" which is the type of defect stored in "defect type", and calculates error. Similarly, in the case of partial image data where "partial image identifier" = "IM32", the comparison and modification unit 902 compares the output data output from the defect detection model 901 with "100%" indicating "defect a" which is the type of defect stored in "defect type", and calculates error.

Further, the comparison and modification unit 902 updates the model parameters of the defect detection model 901 according to the calculated error. As a result, the training unit 407 can generate a trained defect detection model.

The training unit 407 stores the generated trained defect detection model in the trained model storage unit 412.

### <FLOW OF TRAINING PROCESSING BY TRAINING DEVICE>

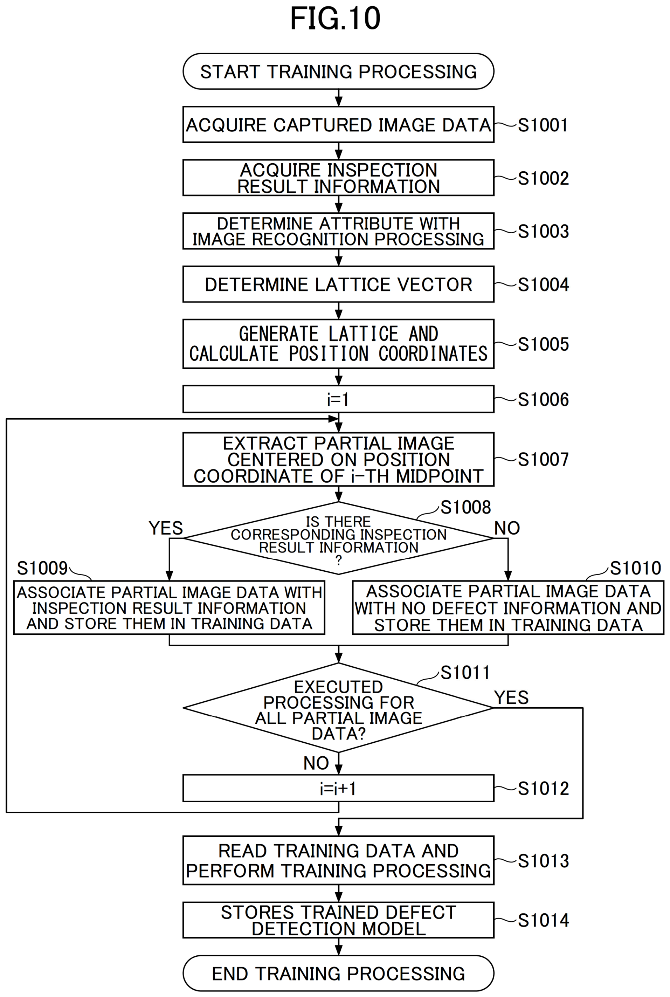

Next, a flow of the training processing by the training device 120 will be described. FIG. 10 is an example of a flowchart illustrating a flow of training processing by the training device. The flowchart shown in FIG. 10 is executed in the training phase.

In a step S1001, the training device 120 acquires image data captured by the imaging device 110.

In a step S1002, the training device 120 acquires inspection result information from the display device 140.

In a step S1003, the training device 120 performs image recognition processing on the captured image data and determines the attribute of each area for each pixel.

In a step S1004, the training device 120 determines a lattice vector based on the position coordinates of the center point of the member 220.

In a step S1005, the training device 120 generates a lattice based on the determined lattice vector and calculates the position coordinates of the midpoint between adjacent lattice points.

In a step S1006, the training device 120 inputs "1" into a counter i for counting the midpoint whose position coordinates are calculated.

In a step S1007, the training device 120 extracts a rectangular region centered on the position coordinates of the i-th midpoint as partial image data.

In a step S1008, the training device 120 determines whether or not there is inspection result information corresponding to the partial image data. If it is determined in the step S1008 that there is corresponding inspection result information (YES in the step S1008), the processing proceeds to a step S1009.

In the step S1009, the training device 120 associates the partial image data with the inspection result information and stores them in the training data.

Conversely, if it is determined in the step S1008 that there is no corresponding inspection result information (NO in the step S1008), the processing proceeds to a step S1010.

In the step S1010, the training device 120 associates "no defect" with the partial image data and stores them in the training data.

In a step S1011, the training device 120 determines whether or not the processing in steps S1007 to S1010 has been executed for all the partial image data extracted from the captured image data. If it is determined in the step S1011 that there is partial image data for which the processing has not been executed (NO in the step S1011), the processing proceeds to a step S1012.

In the step S1012, the training device 120 increments the counter i and returns to the step S1007.

Conversely, if it is determined in step S1011 that the processing has been executed for all the partial image data (YES in the step S1011), the processing proceeds to a step S1013.

In the step S1013, the training device 120 reads the training data, performs training processing on the defect detection model, and generates a trained defect detection model.

In a step S1014, the training device 120 stores the generated trained defect detection model in the trained model storage unit 412.

### <FUNCTIONAL CONFIGURATION OF DEFECT INSPECTION DEVICE>

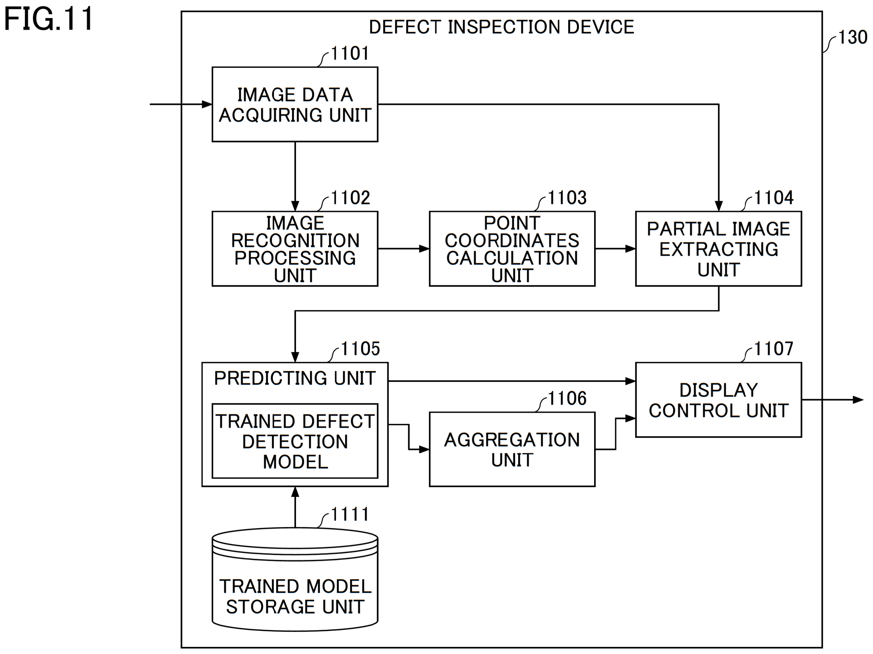

Next, the functional configuration of the defect inspection device 130 will be described. FIG. 11 is a drawing illustrating an example of a functional configuration of the defect inspection device. As described above, a defect inspection program is installed in the defect inspection device 130. By executing the defect inspection program, the defect inspection device 130 functions as an image data acquiring unit 1101, an image recognition processing unit 1102, a point coordinates calculation unit 1103, a partial image extracting unit 1104, a predicting unit 1105, an aggregation unit 1106, and a display control unit 1107.

The image data acquiring unit 1101 acquires captured image data from the imaging device 110. The image data acquiring unit 1101 notifies the image recognition processing unit 1102 and the partial image extracting unit 1104 of the acquired captured image data.

The image recognition processing unit 1102 performs image recognition processing on the captured image data to determine, for each pixel, the attribute of each region included in the captured image data. In the first embodiment, the image recognition processing unit 1102 inputs the captured image data into, for example, a semantic segmentation model to recognize the region of the base 210 and the region of the member 220 for each pixel. The semantic segmentation model used by the image recognition processing unit 1102 is, for example, "DeepLabV3".

The point coordinates calculation unit 1103 calculates a lattice vector in captured image data whose attributes are determined for each pixel. The lattice vector is a vector for generating a lattice that specifies the position coordinates of members 220 arranged in a lattice. The point coordinates calculation unit 1103 determines the starting position and direction of the lattice vector so that the total distance between the lattice points and the center points of the members 220 is minimized. By determining the lattice vector in this way, even if one of the members 220 cannot be recognized in image recognition processing, the lattice can be generated if the other members 220 can be recognized. Thus, the point coordinates calculation unit 403 can appropriately calculate the position coordinates of all the members 220.

The point coordinates calculation unit 1103 generates a lattice based on the determined lattice vector and calculates the position coordinate of the midpoint between the adjacent lattice points in the generated lattice. The point coordinates calculation unit 1103 also notifies the partial image extracting unit 1104 of the calculated position coordinates of the midpoint.

The partial image extracting unit 1104 specifies a rectangular area centered on the position coordinates of the midpoint notified from the point coordinates calculation unit 1103 in the captured image data notified from the image data acquiring unit 1101 and extracts it as partial image data. The shape and size of the rectangular area extracted as partial image data by the partial image extracting unit 1104 are predetermined.

The partial image data extracted by the partial image extracting unit 1104 is sequentially input into the predicting unit 1105.

The predicting unit 1105 predicts the probability of a defect in the partial image data by inputting the partial image data into a defect detection model read from the trained model storage unit 1111. Moreover, the predicting unit 1105 notifies the aggregation unit 1106 and the display control unit 1107 of the predicted probability.

The aggregation unit 1106 acquires the probability that the partial image data has a defect from the predicting unit 1105 and determines whether the acquired probability is equal to or greater than a predetermined threshold value. When it is determined that the acquired probability is equal to or more than a predetermined threshold value, the aggregation unit 1106 determines that the corresponding partial image data has a defect. Conversely, when it is determined that the acquired probability is less than a predetermined threshold value, the aggregation unit 1106 determines that the corresponding partial image data has no defect.

The aggregation unit 1106 determines the presence or absence of a defect for all partial image data extracted from the captured image data, aggregates the determination results, performs statistical processing, and calculates statistical values. The aggregation unit 1106 notifies the display control unit 1107 of the aggregation result and the statistical values.

The display control unit 1107 acquires the probability that the partial image data has a defect from the predicting unit 1105, and superimposes, at a position of the corresponding partial image data in the captured image data, an indicator having a display mode corresponding to the acquired probability. The display control unit 1107 superimposes the aggregation result and the statistical values notified by the aggregation unit 1106 on the captured image data.

Further, the display control unit 1107 controls to display the captured image data on which the indicator, the aggregation result, and the statistical value are superimposed on the display device 140.

### <SPECIFIC EXAMPLES OF PROCESSING OF UNITS OF DEFECT INSPECTION DEVICE>

Next, specific examples of processing of the units of the defect inspection device 130 will be described. Of the processing of the units of the defect inspection device 130, the processing from the image data acquiring unit 1101 to the partial image extracting unit 1104 is the same as the processing from the image data acquiring unit 401 to the partial image extracting unit 404 of the training device 120, and therefore, description thereof is omitted here. Here, only a specific example of processing by the display control unit 1107 will be described.

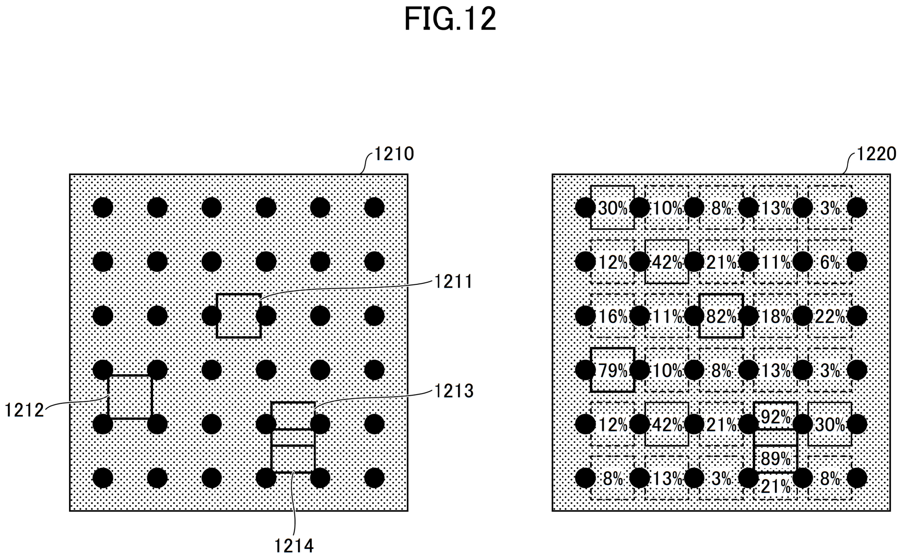

FIG. 12 is a drawing illustrating a specific example of processing by the display control unit. In FIG. 12, reference numeral 1210 indicates a state in which the display control unit 1107 displays an indicator having a display mode corresponding to the defect probability at a position of the corresponding partial image data in the captured image data.

In an example of a reference numeral 1210, a rectangular frame of a thick solid line is displayed as an indicator at the extracted position of the partial image data in which the defect probability is equal to or greater than a predetermined threshold value and it is determined that there is a defect. According to the display mode shown by the reference numeral 1210, by referring to the rectangular frame 1211 of the thick solid line to the rectangular frame 1214 of the thick solid line, the inspector 170 can easily grasp the positions determined to have a defect in the captured image data.

Further, an example of a reference numeral 1220 shows how the predicted probability of each partial image data is displayed at the position where each partial image data is extracted. Further, the example of the reference numeral 1220 shows how the rectangular frame corresponding to the predicted probability of each partial image data is displayed at the position where each partial image data is extracted.

Further, the example of the reference numeral 1220 shows that when the probability of having a defect is equal to or smaller than the first threshold value, a dotted rectangular frame and the probability of having a defect are displayed at the position where the corresponding partial image data is extracted. Further, an example of reference numeral 1220 shows that when the probability of having a defect is larger than the first threshold value and equal to or smaller than the second threshold value, the rectangular frame of a thin solid line and the probability of having a defect are displayed at the position where the corresponding partial image data is extracted. Further, an example of reference numeral 1220 shows that when the probability of having a defect is larger than the second threshold value, the rectangular frame of a thick solid line and the probability of having a defect are displayed at the position where the corresponding partial image data is extracted.

According to the display mode of reference numeral 1220, the prediction of the trained defect detection model for the partial image data can be readily identified by referring to each rectangular frame.

In the example of the reference numeral 1220, for convenience of illustration, a rectangular frame in a display mode corresponding to the probability of having a defect is displayed for some of the extracted partial image data. However, for other partial image data, a rectangular frame in a display mode corresponding to the probability of having a defect may be similarly displayed.

In the example of the reference numeral 1220, the line type and thickness of the rectangular frame are shown as being changed as a display mode corresponding to the probability of having a defect, but the display mode corresponding to the probability of having a defect is not limited to this. For example, the color, shape, or size of the rectangular frame may be changed.

In the example of reference numeral 1220, although the display of the aggregation result and the statistical value is omitted for convenience of illustration, the aggregation result and the statistical value may be displayed at any position.

### <FLOW OF DEFECT INSPECTION PROCESSING BY DEFECT INSPECTION DEVICE>

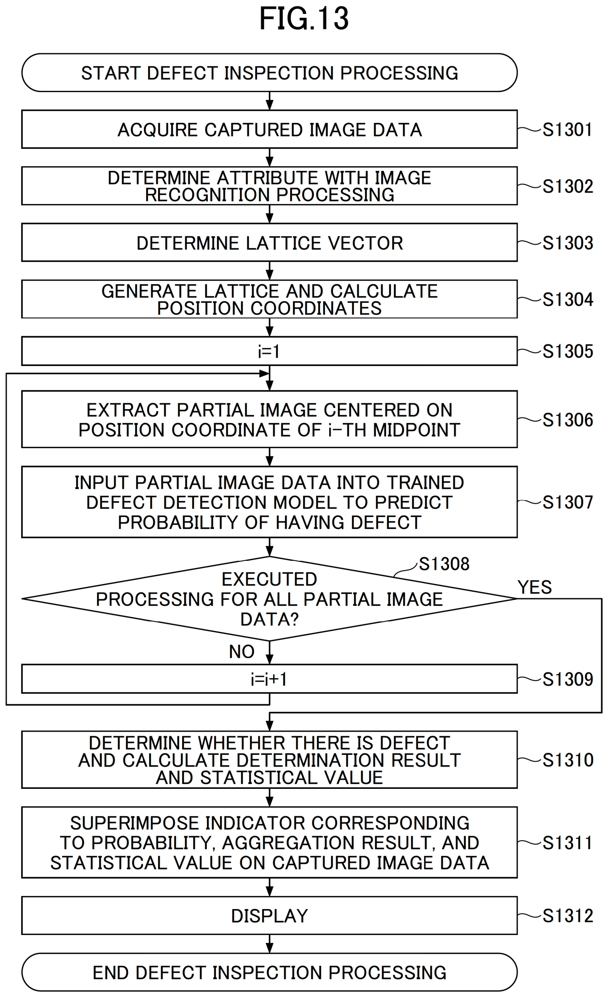

Next, a flow of defect inspection processing by the defect inspection device 130 will be described. FIG. 13 is an example of a flowchart illustrating a flow of the defect inspection processing of the defect inspection device. The flowchart shown in FIG. 13 is executed in the inspection phase.

In a step S1301, the defect inspection device 130 acquires image data captured by the imaging device 110.

In a step S1302, the defect inspection device 130 performs image recognition processing on the captured image data and determines the attribute of each region for each pixel.

In a step S1303, the defect inspection device 130 determines a lattice vector based on the position coordinates of the center point of the member.

In a step S1304, the defect inspection device 130 generates a lattice based on the determined lattice vector and calculates the position coordinates of the midpoint between adjacent lattice points.

In a step S1305, the defect inspection device 130 inputs "1" into the counter i for counting the midpoint whose position coordinates are calculated.

In a step S1306, the defect inspection device 130 extracts a rectangular region centered on the position coordinates of the i-th midpoint as partial image data.

In a step S1307, the defect inspection device 130 inputs the partial image data into the trained defect detection model to predict the probability that the partial image data has a defect.

In a step S1308, the defect inspection device 130 determines whether or not the probability of a defect is predicted for all the partial image data.

In the step S1308, if it is determined that there is partial image data for which the defect probability is not predicted (NO in the step S1308), the processing proceeds to a step S1309.

In the step S1309, the defect inspection device 130 increments the counter i and returns to a step S1306.

Conversely, in the step S1308, if it is determined that the defect probability is predicted for all partial image data (YES in the step S1308), the processing proceeds to a step S1310.

In the step S1310, the defect inspection device 130 determines whether there is a defect in the partial image data based on the predicted probability. In addition, the defect inspection device 130 aggregates and statistically processes the determination results to calculate a statistical value.

In a step S1311, the defect inspection device 130 superimposes the indicator corresponding to the probability, the aggregation result, and the statistical value on the captured image data.

In a step S1312, the defect inspection device 130 displays on the display device 140 the captured image data on which the indicator corresponding to the probability, the aggregation result, and the statistical value are superimposed.

### <SUMMARY>

As is clear from the above description, the defect inspection device 130 according to the first embodiment:
- performs image recognition processing on the captured image data obtained by capturing an image of the inspection target 160, and determines the attribute of each region in the inspection target 160 for each pixel;
- extracts partial image data, from the captured image data, including the base 210 in which occurrence of a defect is predicted among the regions in the inspection target 160;
- predicts the probability of the partial image data having a defect by inputting the partial image data into the trained defect detection model; and
- displays an indicator having a display mode corresponding to the predicted probability superimposed on the captured image data at the position of the extracted partial image data.

As described above, the defect inspection device 130 according to the first embodiment extracts partial image data from the captured image data and predicts the probability of a defect in the extracted partial image data. Thus, according to the first embodiment, the processing load of the defect inspection device 130 can be reduced as compared with the case where the processing is performed collectively for the entire captured image data.

Further, the defect inspection device 130 according to the first embodiment performs image recognition processing to determine the attribute of each region and extracts a region having a specific attribute in which occurrence of a defect is predicted as partial image data. Thus, according to the first embodiment, even if the inspection target is a structure formed of a plurality of members, the region of the member in which occurrence of a defect is predicted can be extracted as partial image data.

That is, the region of the member indicative of no likely occurrence of a defect is excluded as a prediction target, and thus the processing load of the defect inspection device 130 can be further reduced as compared with the case where all regions are extracted as partial image data. Further, since the specific attribute in which occurrence of a defect is predicted occupies a large proportion of the extracted partial image data, the detection accuracy of a minute defect can be improved as compared with the case where a minute defect is detected from captured image data including regions of a plurality of types of members.

### [SECOND EMBODIMENT]

In the first embodiment, a case where the defect inspection device 130 performs defect inspection processing on captured image data obtained by photographing a semiconductor package substrate to be inspected from above has been described. Therefore, in the first embodiment, the region having a specific attribute (first attribute) in which the occurrence of a defect is predicted is a solder resist region, and the region having an attribute (second attribute) in which the occurrence of a defect is not predicted is a solder joint region.

However, the captured image data obtained by the defect inspection device 130 is not limited to this. Also, a method of extracting partial image data by the defect inspection device 130 is not limited to this.

For example, image data obtained by capturing an image of a semiconductor package substrate to be inspected from the side may be obtained to perform defect inspection processing. In the case of image data obtained by capturing an image of a semiconductor package substrate from the side, a plurality of layers of glass fibers impregnated with resin are included. Therefore, in the image recognition processing units 402 and 1102, for example, a region of the first layer is determined as a region having a first attribute, and a region of the second layer is determined as a region having another first attribute. Further, in the clipping unit, for example, partial image data including a region of the first layer and partial image data including a region of the second layer are respectively clipped. In this case, a region other than the layer region is a region having the second attribute.

That is, a region determined by the image recognition processing units 402 and 1102 to have a specific attribute in which occurrence of a defect is predicted includes:
- a region of a specific type of member, as in the first embodiment; and
- a region of a specific group of members consisting of a plurality of types of members, as in the second embodiment.
Specifically, a region having a specific attribute includes a case where the type of member is one specific type, and a case where the type of member includes a plurality of types of members, but the combination of the type and arrangement of the members is one specific type.

In this manner, the second embodiment can enjoy the same effect as the first embodiment by extracting the partial image data for each region including a plurality of types of members but having a specific combination of the type and arrangement of the members.

### [THIRD EMBODIMENT]

In the first embodiment, the case where the type of defect is one type has been described, but the type of defect may be a plurality of types. When the type of defect is a plurality of types, the display control unit 1107 may be configured to display a different display mode for each type of defect. The aggregation unit 1106 may be configured to aggregate the determination results for each type of defect.

Although the method of aggregating the determination results or the method of statistical processing has not been described in detail in the first embodiment, the aggregation unit 1106 may, for example, aggregate the number of units of partial image data determined to have a defect. Alternatively, when partial image data determined to have a defect is continuous, the aggregation unit 1106 may aggregate the number of units of continuous partial image data. Alternatively, the aggregation unit 1106 may calculate the ratio of partial image data determined to have a defect by dividing the number of partial image data determined to have a defect by the number of all partial image data extracted from the captured image data. Alternatively, the aggregation unit 1106 may generate a histogram based on the probability of having a defect.

Further, in the first embodiment, a lattice is generated by determining a lattice vector, but the method of generating the lattice is not limited to this. Further, in the first embodiment, a rectangular region centered on the position coordinate of the midpoint of the generated lattice is extracted as partial image data, but the method of extracting the partial image data is not limited to this.

Further, in the first embodiment, both the partial image data determined to have a defect and the partial image data determined to have no defect are used as the training data, but only one of the partial image data may be used as the training data.

Further, in the first embodiment, a case where the training device 120 and the defect inspection device 130 are configured as separate devices has been described, but the training device 120 and the defect inspection device 130 may be configured as an integral device.

Further, the present invention is not limited to these embodiments, and various variations and modifications may be made without departing from the scope of the present invention.

The present application is based on and claims priority to Japanese patent application No. 2023-108434 filed on June 30, 2023, with the Japan Patent Office, the entire contents of which are hereby incorporated by reference.

### REFERENCE SIGNS LIST

100: defect inspection system
110: imaging device
120: training device
130: defect inspection device
140: display device
210: base
220: member
401: image data acquiring unit
402: image recognition processing unit
403: point coordinates calculation unit
404: partial image extracting unit
405: inspection result information acquiring unit
406: training data generating unit
407: training unit
611: lattice vector
621, 622: midpoint
711, 712: partial image data
820: training data
901: defect detection model
1101: image data acquiring unit
1102: image recognition processing unit
1103: point coordinates calculation unit
1104: partial image extracting unit
1105: predicting unit
1106: aggregation unit
1107: display control unit

## Claims

1. A defect inspection device comprising:
an image recognition processing unit configured to determine attributes of respective regions within an inspection target by performing image recognition processing on captured image data obtained by photographing the inspection target;
an extracting unit configured to extract, from the captured image data, partial image data including a region having a specific attribute among the respective regions within the inspection target;
a predicting unit configured to predict, by inputting the partial image data into a trained defect detection model, a probability that the partial image data includes a defect; and
a display control unit configured to superimpose and display, at a position from which the partial image data has been extracted in the captured image data, an indicator having a display mode corresponding to the predicted probability.

2. The defect inspection device according to claim 1, wherein the region having the specific attribute is a region having an attribute in which occurrence of a defect is predicted.

3. The defect inspection device according to claim 1 or 2, wherein:
the image recognition processing unit is configured to determine a region having a first attribute in which occurrence of a defect is predicted in the inspection target and regions having a second attribute in which occurrence of a defect is not predicted in the inspection target; and
the extracting unit is configured to calculate a position of extraction from which the partial image data including the region having the first attribute is extracted, based on an arrangement of the regions having the second attribute.

4. The defect inspection device according to claim 3, wherein:
the regions having the second attribute are arranged in a lattice in the inspection target; and
the extracting unit is configured to:
generate the lattice based on center points of the regions having the second attribute;
calculate a position of a vertical-direction midpoint, a position of a horizontal-direction midpoint, or a position of a diagonal direction midpoint between lattice points, as the position of extraction; and
extract, as the partial image data, rectangular regions centered on the calculated position of extraction within the captured image data.

5. The defect inspection device according to claim 4, wherein the extracting unit is configured to extract square regions of uniform size centered on respective positions of extraction as the partial image data.

6. The defect inspection device according to claim 4 or 5, wherein:
the inspection target is a semiconductor package substrate;
the region having the first attribute is a solder resist region; and
the regions having the second attribute are solder joint regions.

7. The defect inspection device according to any one of claims 3 to 6, wherein the image recognition processing unit is configured to determine, for each pixel, the first attribute and the second attribute using a semantic segmentation model.

8. The defect inspection device according to any one of claims 1 to 7, wherein the display control unit is configured to superimpose and display, at a position where the partial image data having the predicted probability equal to or greater than a predetermined threshold has been extracted, a rectangular frame having a size corresponding to the extracted partial image data and indicating a defect.

9. The defect inspection device according to any one of claims 1 to 8, wherein the display control unit is configured to superimpose and display, at a position where the partial image data has been extracted, the predicted probability and a rectangular frame having a size corresponding to the extracted partial image data.

10. The defect inspection device according to any one of claims 1 to 9, further comprising:
an aggregation unit configured to determine presence or absence of a defect based on the predicted probability with respect to each said partial image data and to aggregate determination results; and
a calculation unit configured to perform statistical processing based on the determination results to calculate a statistical value,
wherein the display control unit is configured to superimpose and display, on the captured image data, a result of aggregation and the calculated statistical value.

11. The defect inspection device according to any one of claims 1 to 10, wherein the predicting unit is configured to predict the probability that the partial image data includes a defect, by inputting the partial image data into the trained defect detection model trained based on training data including partial image data and information indicating types of defects.

12. A defect inspection method performed by a computer, comprising:
determining attributes of respective regions within an inspection target by performing image recognition processing on captured image data obtained by photographing the inspection target;
extracting, from the captured image data, partial image data including a region having a specific attribute among the respective regions within the inspection target;
predicting, by inputting the partial image data into a trained defect detection model, a probability that the partial image data includes a defect; and
superimposing and displaying, at a position from which the partial image data has been extracted in the captured image data, an indicator having a display mode corresponding to the predicted probability.

13. A defect inspection program configured to cause a computer to perform a method, the method comprising:
determining attributes of respective regions within an inspection target by performing image recognition processing on captured image data obtained by photographing the inspection target;
extracting, from the captured image data, partial image data including a region having a specific attribute among the respective regions within the inspection target;
predicting, by inputting the partial image data into a trained defect detection model, a probability that the partial image data includes a defect; and
superimposing and displaying, at a position from which the partial image data has been extracted in the captured image data, an indicator having a display mode corresponding to the predicted probability.
